# FASCICULE DE BREVET EUROPEEN

(11) **EP 2 232 390 B1**
(45) Date de publication et mention de la délivrance du brevet: **28.06.2017**
(21) Numéro de dépôt: 08857662.4
(22) Date de dépôt: 03.12.2008
(51) Int. Cl.: G06F 17/30, H04L 29/06, H04L 29/08

(54) **PROCÉDÉ D'ACHEMINEMENT DE MESSAGES SUR UN RÉSEAU ET SYSTÈME DE MISE EN OEUVRE DU PROCÉDÉ**
VERFAHREN ZUM WEITERLEITEN VON NACHRICHTEN ÜBER EIN NETZWERK UND SYSTEM ZUR IMPLEMENTIERUNG DES VERFAHRENS
METHOD OF FORWARDING MESSAGES OVER A NETWORK AND SYSTEM FOR IMPLEMENTING THE METHOD

(30) Priorité: 04.12.2007 FR 0708456
(43) Date de publication de la demande: 29.09.2010
(73) Titulaire: THALES, 92400 Courbevoie (FR)
(72) Inventeur: GEORGEL, Dominique, F-95150 Taverny (FR); IOZELLI, Laurent, 49300 CHOLET (FR); EMIYA, Vivien, F-75013 Paris (FR); PONROY, Florian, F-75015 Paris (FR)
(74) Mandataire: Lucas, Laurent Jacques
(86) Numéro de dépôt international: PCT/EP2008/066735
(87) Numéro de publication internationale: WO 2009/071597

(56) Documents cités:
- SAILESH SATHISH ET AL: "Delivery Context Access for Mobile Browsing" COMPUTING IN THE GLOBAL INFORMATION TECHNOLOGY, 2006. ICCGI '06. INTERNATIONAL MULTI-CONFERENCE ON, IEEE, PI, 1 août 2006 (2006-08-01), pages 1-8, XP031056470 ISBN: 978-0-7695-2690-4
- FERNANDO LÃ PEZ ET AL: "Multimedia Content Adaptation Within the CAIN Framework Via Constraints Satisfaction and Optimization" ADAPTIVE MULTIMEDIA RETRIEVAL: USER, CONTEXT, AND FEEDBACK LECTURE NOTES IN COMPUTER SCIENCE;;LNCS; [LECTURE NOTES IN COMPUTER SCIENCE;;LNCS], SPRINGER BERLIN HEIDELBERG, BE, vol. 4398, 2006, pages 149-163, XP019078468 ISBN: 978-3-540-71544-3
- WEI-SHUN LIAO ET AL: "Mobile Media Content Sharing in UPnP-Based Home Network Environment" APPLICATIONS AND THE INTERNET WORKSHOPS, 2007. SAINT WORKSHOPS 2007. I NTERNATIONAL SYMPOSIUM ON, IEEE, PI, 1 janvier 2007 (2007-01-01), pages 52-52, XP031044149 ISBN: 978-0-7695-2757-4
- M. DITZE, C. LOESER, H. BOHN, A. BOBEK, AND F. GOLATOWSKI: "QUALITY OF SERVICE AND PROACTIVE CONTENT REPLICATION IN UPNP BASED A/V ENVIRONMENTS" PARALLEL AND DISTRIBUTED COMPUTING AND NETWORKS - 2005, 15 février 2005 (2005-02-15), - 17 février 2005 (2005-02-17) pages 729-734, XP002487888
- HYUNRYONG LEE ET AL: "A Proxy-Based Distributed Approach for Reliable Content Sharing Among UPnP-Enabled Home Networks" ADVANCES IN MULITMEDIA INFORMATION PROCESSING - PCM 2005 LECTURE NOTES IN COMPUTER SCIENCE;;LNCS, SPRINGER-VERLAG, BE, vol. 3767, 1 janvier 2005 (2005-01-01), pages 443-454, XP019023982 ISBN: 978-3-540-30027-4
- FOX G ET AL: "Toward Flexible Messaging for SOAP-Based Services", SUPERCOMPUTING, 2004. PROCEEDINGS OF THE ACM/IEEE SC2004 CONFERENCE PITTSBURGH, PA, USA 06-12 NOV. 2004, PISCATAWAY, NJ, USA,IEEE, 6 November 2004 (2004-11-06), pages 8-8, XP010780333, DOI: 10.1109/SC.2004.60 ISBN: 978-0-7695-2153-4

## Description

La présente invention concerne un procédé d'acheminement de messages sur un réseau et un routeur de mise en oeuvre du procédé. Le procédé s'applique notamment aux échanges de messages sur des réseaux constitués de sous-réseaux hétérogènes.

Pour répondre aux besoins grandissants d'échanges de données entre applications informatiques tout en s'appuyant sur une seule et même infrastructure matérielle et logique, des systèmes permettant de traiter des flux unifiés de messages ont été créés. Ces systèmes, souvent désignés par l'acronyme anglo-saxon ESB pour « Entreprise Service Bus », permettent à des applications hétérogènes de communiquer, ces applications étant, par exemple, des outils de messagerie, des applications orientées service (SOA pour « Service Oriented Architecture ») ou encore des logiciels de dissémination de données. Les ESB sont bien adaptés à une installation sur des réseaux locaux utilisant le protocole Internet IP (Internet Protocol), lesquels réseaux offrent une bande passante importante. Cependant, lorsque ces applications sont interconnectées via un ou plusieurs sous-réseaux contraints - notamment en termes de capacité de débit -, des effets indésirables peuvent survenir, telles que des pertes de messages ou des temps de transmission inacceptables.

Par ailleurs, certains outils prennent en compte le caractère contraint de certains sous-réseaux. A titre d'exemple, des outils de messagerie ont été développés en vue d'optimiser les transmissions de courriers à travers des réseaux de radiocommunications. Néanmoins, ces outils sont des applications particulières développées pour répondre à des besoins spécifiques ; ils ne sont pas prévus pour transporter des messages issus d'applications multiples.

En plus des problèmes d'hétérogénéité au niveau des capacités des sous-réseaux, un système d'acheminement de messages doit, si possible, permettre de s'adapter aux changements de topologie du réseau et/ou de déterminer dynamiquement des routes de transmission en fonction des destinataires d'un message.

Enfin, les conditions d'exploitation du réseau impliquent parfois de devoir s'adapter à la mobilité des applications et des noeuds du réseau.

La publication de Fox, G., Pallickara, S., & Parastatidis, S., "Toward flexible messaging for SOAP-based services" (Supercomputing, 2004., Proceedings of the ACM/IEEE SC2004 Conference, pp. 8-8, IEEE) divulgue un procédé d'acheminement de messages, mis en oeuvre dans un routeur d'un réseau distribué comportant des réseaux hétérogènes, le procédé étant mis-en oeuvre au niveau de la couche OSI 7.

Un objet de l'invention est de proposer un procédé d'acheminement de messages comme celui revendiqué à la revendication 1. Avantageusement, au moins un sous-réseau contraint est un sous-réseau de radiocommunications.

Avantageusement, un message déposé sur la première interface est formaté selon le standard SOAP, le format d'adressage utilisé dans le message étant une extension du standard « WS-addressing » permettant de spécifier plusieurs destinataires au message, ladite extension étant effectuée par l'ajout d'un champ spécifique dans l'entête du message.

Un autre objet de l'invention est un routeur de messages comme celui revendiqué à la revendication 4. Des modes de réalisation préférés correspondent aux revendications dépendantes. Avantageusement, le routeur comporte un module de signalisation configuré pour réserver des ressources sur des sous-réseaux pour des applications souhaitant établir des sessions de distribution aux exigences de qualité de services particulières, le module d'acheminement étant configuré pour interagir avec le module de signalisation pour établir les priorités de transfert aux messages.

Un autre objet de l'invention est un système de distribution de messages entre une source et un ou plusieurs destinataires connectés sur un réseau distribué pour la mise en oeuvre d'un procédé objet de l'invention, comprenant un ou plusieurs sous-réseaux contraints, caractérisé en ce qu'il comporte plusieurs routeurs de messages objets de l'invention.

D'autres caractéristiques apparaîtront à la lecture de la description détaillée donnée à titre d'exemple et non limitative qui suit faite en regard de dessins annexés qui représentent :
- la figure 1, une illustration d'un réseau comportant des routeurs mettant en oeuvre le procédé selon l'invention,
- la figure 2, un exemple de mode de réalisation d'un routeur de messages selon l'invention.

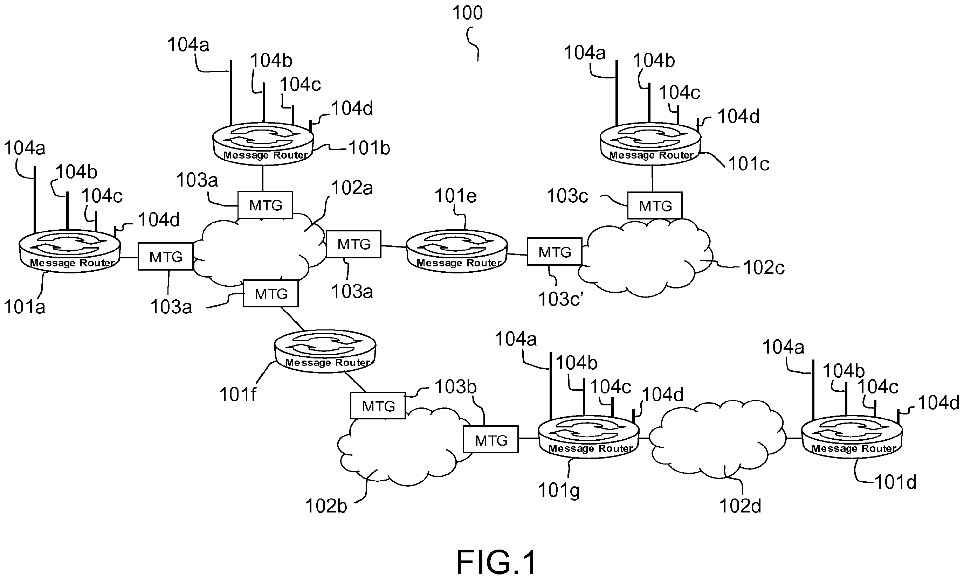

La figure 1 illustre un réseau comportant plusieurs routeurs mettant en oeuvre le procédé selon l'invention. Le réseau 100 est formé de routeurs de messages 101 interconnectant des sous-réseaux 102a, 102b, 102c, 102d.

Dans l'exemple de la figure 1, chaque sous-réseau 102a, 102b, 102c, 102d est de nature différente. Trois sous-réseaux 102a, 102b, 102c sont des réseaux de radiocommunications fonctionnant sur des bandes de fréquences différentes. Le premier sous-réseau 102a occupe une partie de la bande UHF (« Ultra High Frequency »), le second réseau 102b occupe la bande VHF (« Very High Frequency ») et le troisième réseau 102c est un réseau HF («High Frequency »). Un quatrième sous-réseau 102d est un réseau local haut débit fonctionnant sur le protocole Internet IP (« Internet Protocol »). Chacun de ces sous-réseaux 102a, 102b, 102c, 102d a donc des capacités de transport inégales.

Un routeur de messages est, selon sa disposition au sein du réseau 100, soit un noeud de transit entre plusieurs sous-réseaux, soit un point d'accès pour des applications utilisatrices du réseau 100, soit encore les deux à la fois. Dans l'exemple, quatre routeurs 101 a, 101b, 101 c, 101 d sont des points d'accès au réseau 100, deux routeurs 101e, 101f sont des noeuds de transit, et un routeur 101 g est à la fois un point d'accès au réseau 100 et un noeud de transit. Plus précisément, le premier routeur 101a et le deuxième routeur 101b sont des points d'accès au premier sous-réseau 102a, le troisième routeur 101 c est un point d'accès au troisième sous-réseau 102c, le quatrième routeur 101d est un point d'accès au quatrième sous-réseau 102d. Le cinquième routeur 101e est un noeud de transit entre le premier sous-réseau 101a et le troisième sous-réseau 101 c et le sixième routeur 101f est un noeud de transit entre le premier sous-réseau 101a et le deuxième sous-réseau 101 b. Enfin, le septième routeur 101 g est à la fois un noeud de transit entre le deuxième sous-réseau 102b et le quatrième sous-réseau 102d et un point d'accès au réseau 100.

Les routeurs 101 a, 101 b, 101 c, 101 d, 101 g remplissant le rôle de point d'accès au réseau 100 peuvent notamment être connectés aux applications 104a, 104b, 104c, 104d suivantes :
o des grilles de dissémination de données 104a, celles-ci mettant en relation des producteurs de données avec des consommateurs de données ;
o des applications liées aux architectures orientées services 104b ou, selon la terminologie anglo-saxonne, applications SOA pour « Service Oriented Architecture », ces applications lorsqu'elles sont déployées autour de sous-réseaux contraints devant alors bénéficier d'un système performant de distribution de messages ;
o des applications existantes 104c, telles que la messagerie, la messagerie instantanée, le transfert de fichiers, ces applications étant généralement désignées par le terme « legacy » ;
o des applications 104d de réplication (par exemple pour la réplication de bases de données) et/ou de signalisation (par exemple pour transmettre des informations de mise à jour sur la connexion/déconnexion de postes connectés au réseau 100).
Les applications suscitées, de natures hétérogènes, sont pour le réseau 100, des sources et/ou des destinataires de messages, lesquels messages sont produits dans un format unique. L'unification des flux de messages est notamment obtenue par le choix d'un protocole d'échange facilitant l'interopérabilité entre applications différentes. Dans l'exemple, les messages respectent un protocole d'échange fondé sur les Services Web, et plus particulièrement sur le standard SOAP (« Simple Object Access Protocol »). Un intérêt du routeur selon l'invention est qu'il traite les messages au niveau application, ce qui permet notamment d'appliquer une politique de qualité en fonction de la nature des messages transportés.

Par ailleurs, des passerelles de transfert 103a, 103b, 103c sont disposées respectivement autour de chaque sous-réseau contraint 102a, 102b, 102c, de manière à permettre l'adaptation des messages aux protocoles spécifiques de ces sous-réseaux contraints 102a, 102b, 102c. Ces passerelles sont disposées par paires, une première passerelle étant disposée pour traiter des messages entrant dans un sous-réseau, une seconde passerelle étant disposée pour traiter des messages sortant de ce même sous-réseau, les passerelles prenant l'une et l'autre alternativement la fonction de passerelle entrante ou sortante selon le sens d'acheminement des messages. Par exemple, une passerelle 103c traitant un message entrant dans un sous-réseau 102a, 102b, 102c adapte ledit message audit sous-réseau (par exemple fragmente le message, reçoit des acquittements, gère les ré-émissions) et la passerelle duale 103c', c'est à dire la passerelle traitant ce message en sortie du sous-réseau, applique l'opération duale (ici reconstitue le message à partir des fragments formés par la précédente passerelle 103c, gère l'envoi des acquittements). Il est à noter, dans l'exemple de la figure 1, qu'aucune passerelle de transfert n'est placée entre les routeurs de messages 101 d, 101g et le quatrième sous-réseau 102d IP haut débit. En effet, le protocole de transport IP utilisé sur ces sous-réseaux 102d étant natif à SOAP, il n'est pas nécessaire d'adapter le message pour le transmettre sur ce sous-réseau 102d.

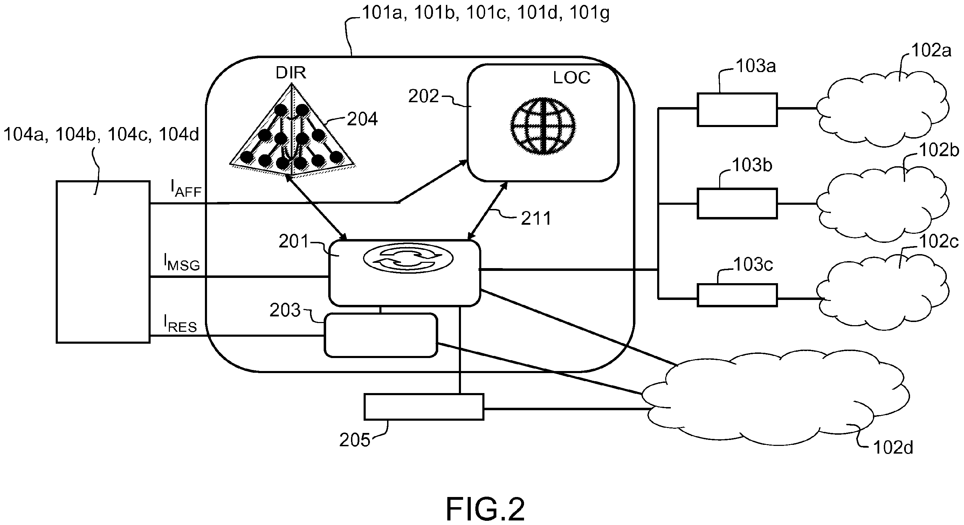

La figure 2 présente un exemple de mode de réalisation d'un routeur de messages selon l'invention. Le routeur 101a à 101f selon l'invention comprend trois interfaces avec le niveau application.

Une première interface I_{AFF} d'affiliation permet à une application de demander à enregistrer sa localisation auprès du réseau 100 ou de s'inscrire dans un groupe de distribution, cette notion de groupe de distribution étant détaillée par la suite. En effet, le routeur 101 a à 101 g offre la possibilité d'adresser le message à un groupe de distribution, c'est à dire à plusieurs destinataires regroupés sous un seul identifiant. Une demande d'affiliation générée par une application connectée au routeur de messages 101 a, 101 b, 101 c, 101 d, 101 g est effectuée en spécifiant l'identifiant de ladite application, dans l'exemple, en utilisant le standard WS-addressing. Il n'est pas effectué d'affiliation pour les routeurs de messages étant de simple noeuds de transit, comme les cinquième 101e et sixième 101f routeurs de messages.

Une deuxième interface I_{RES} permet à une source d'établir une session pour transmettre ou recevoir un flux de messages requérant une qualité de service particulière, par exemple en termes de latence -dans ce cas, la demande de réservation de ressources est formulée par l'application réceptrice- ou de débit -dans ce cas, la demande de réservation de ressources est formulée par l'application émettrice-. Dans l'exemple, cette session est ensuite utilisée pour transmettre un flux de messages SOAP. Pour propager les exigences de qualité de service de la session vers les couches sous-jacentes du modèle OSI (« Open Systems Interconnection »), un protocole de réservation de ressources tel que RSVP (« Resource ReSerVation Protocol ») peut alors être mis en oeuvre.

Une troisième interface I_{MSG} permet à une source de déposer un message à distribuer vers un ou plusieurs destinataires spécifiés dans le message. L'adressage à plusieurs destinataires est effectué grâce à une extension du standard WS-addressing : un champ est ajouté dans l'entête du message SOAP. La nature d'un destinataire - obligatoire ou optionnel - peut être précisée, de même qu'un identifiant peut désigner un groupe de distribution. Un destinataire qualifié d'optionnel est desservi s'il peut l'être depuis l'arbre de distribution déterminé pour desservir les destinataires obligatoires du message. Le caractère optionnel ou obligatoire d'un destinataire est, dans l'exemple, spécifié dans un champ spécifique du protocole d'adressage. A titre d'exemple, une source connectée au premier routeur 101a émet un message dont les destinataires sont les suivants : un destinataire obligatoire connecté au quatrième routeur 101d, un destinataire optionnel connecté au troisième routeur 101c, et un autre destinataire optionnel connecté au septième routeur 101g. L'arbre de distribution du message est déterminé pour acheminer le message vers le seul destinataire obligatoire, lequel est connecté au quatrième routeur 101d. Le chemin suivi par le message comprendra donc respectivement les routeurs suivants : le premier routeur 101 a, le sixième routeur 101f, le septième routeur 101g et le quatrième routeur 101d. Parmi les destinataires optionnels, seul celui connecté au septième routeur 101g est alors desservi. Il est à noter qu'un destinataire optionnel peut, en outre, être un groupe de distribution.

Le routeur comporte un module d'acheminement 201, un module de localisation et de routage 202, un module de signalisation 203 et un annuaire technique 204.

Le module de localisation et de routage 202, qualifié de « module LOC » 202 par la suite, élabore l'arbre de distribution d'un message en tenant compte notamment de la localisation des destinataires du message, de la topologie instantanée du réseau 100 et des sous-réseaux 102a à 102d, ainsi que des capacités de ces sous-réseaux. Le module LOC 202 peut, par exemple, être le module LOC décrit dans le brevet référencé FR2878676 du demandeur Thales, l'un des intérêts de ce module LOC étant qu'il permet de s'adapter aux changements de topologie du réseau grâce à une mise à jour de ses tables de localisation et de routage. Le module LOC 202 permet également de gérer des groupes de distribution, chacun desdits groupes étant, par exemple, reconnu par un identifiant de type URI (« Uniform Resource Identifier »). Cette URI particulière est définie dans une base de données du module LOC 202 et correspondant à plusieurs URI de simples destinations ou de groupes.

Le module LOC 202 est mis à jour entre autres grâce à des messages de d'affiliation de localisation émis par les applications locales utilisatrices du réseau 100 et reçus, dans l'exemple par la première interface I_{AFF} d'affiliation, ces messages informant le module LOC 202 :
o du rattachement / détachement des applications à ce routeur de messages afin que le module LOC 202 puisse construire la topologie instantanée du réseau 100 (en recoupant sa connaissance locale avec la connaissance qu'il a des autres modules LOC déployés sur le réseau) ;
∘ de la présence ou non des destinations référencées dans les groupes de distribution afin de mettre à jour la base de données distribuée définissant lesdits groupes de distribution.

Le module de signalisation 203 réserve des ressources sur des sous-réseaux 102a à 102d pour des applications souhaitant établir des sessions de distribution aux exigences de qualité de services particulières, par exemple un temps de latence et/ou un débit garanti ou encore un contrôle de la variation du temps de latence.

L'annuaire technique 204 fournit les informations nécessaires à l'administration du routeur de messages 101 a à 101 g. Ces informations sont, par exemple, des données de configuration définissant la politique de qualité de service du routeur de messages 101a à 101g ou les identifiants des applications autorisées à utiliser les services du routeur de messages 101 a à 101 g.

Lorsqu'un message est reçu par un routeur de messages 101 a à 101g, le module d'acheminement 201 demande au module LOC 202 d'identifier le ou les prochains routeurs 101 a à 101 g à atteindre, autrement dit, le ou les prochains bonds permettant d'acheminer le message vers son ou ses destinataires. Si ces destinataires sont locaux, c'est à dire connectés au routeur de message courant, le message est transmis directement aux applications concernées, par exemple, à un serveur de messagerie ou à un intermédiaire de dissémination de données. Si, au contraire, ces destinataires sont distants, le module d'acheminement 201 effectue, pour chaque prochain bond, une copie du message. Dans chacune de ces copies, il mentionne les destinataires obligatoires qui doivent être servis par ce prochain bond ainsi que les destinataires optionnels potentiellement atteignables via ce bond. Les interactions entre le module d'acheminement 201 et le module LOC 202 sont représentées par une double flèche 211 sur la figure 2.

L'arbre de distribution du message est ainsi établi bond par bond, et non pas en une seule fois. Cette caractéristique permet d'adapter dynamiquement l'arbre de distribution aux changements de topologie du réseau 100 et de faciliter la gestion de destinataires optionnels.

Lorsque le prochain bond transmet un message vers un sous-réseau ne disposant pas de capacité IP, le module LOC 202 précise les adresses de ce sous-réseau à utiliser pour distribuer le message. En cas de transfert sur un réseau contraint, le module d'acheminement 201 :
(i) compresse, si nécessaire, le contenu du message,
(ii) vérifie si certaines pièces jointes doivent être retirées, la décision de retrait étant prise, par exemple, en fonction la taille desdites pièces jointes,
(iii) transfère le message avec ses paramètres (notamment l'adresse de la passerelle de transfert de sortie) vers une passerelle de transfert MTG, laquelle gère l'adressage et les adaptations au protocole spécifique du sous-réseau contraint.
En cas de transfert du message sur un sous-réseau disposant de capacités de connexion multipoint, ou « multicast », le module d'acheminement 201 confie le message à un module passerelle 205 capable de gérer un protocole de transfert avec acquittement ou non vers les destinataires.

Dans l'exemple, lorsqu'une application sollicite la distribution d'un message à destination d'un groupe via l'interface I_{MSG}, le module d'acheminement 201 demande au module LOC 202 d'identifier les destinataires correspondant à cet identifiant de groupe. Selon un autre mode de réalisation, l'identifiant de groupe n'est pas résolu et le message est transmis aux prochains routeurs de messages en conservant cet identifiant de groupe.

Le module d'acheminement 201 met en oeuvre une gestion de la qualité de service dans la distribution des messages.

D'une part, le module d'acheminement 201 gère pour un même prochain bond des sessions différenciées selon la précédence des messages. Ainsi, le module 201 :
∘ marque les paquets d'un même message de façon univoque, de sorte que ces paquets disposent d'une priorité de transfert correspondant aux caractéristiques du message,
∘ transfère les messages urgents sans avoir à attendre le transfert de message moins urgents et/ou de taille importante.

D'autre part, le module d'acheminement 201 permet la transmission de flux de messages sur une session préalablement initialisée par le module de signalisation 203, des ressources ayant alors été réservées sur les sous-réseaux à traverser pour cette session. Le module permet ainsi de respecter des temps de latence et/ou des débits souhaités dans le transfert des messages d'une session.

Le routeur selon l'invention comporte de multiples avantages, notamment grâce à la construction bond à bond de l'arbre de distribution d'un message. Il permet de gérer simplement des destinataires optionnels, s'adapte à la mobilité des applications connectées au réseau, prend en charge la gestion de groupes de destinataires, permet de transmettre des flux de données unifiés en multipoint, le tout à travers un réseau pouvant comprendre un ou plusieurs sous-réseaux contraints.

## Revendications

1. Procédé d'acheminement de messages produits au niveau 7 dans un format unique sur la base d'un protocole facilitant l'interopérabilité entre applications différentes (SOAP) mis en oeuvre dans un réseau distribué (100) comprenant au moins un sous-réseau contraint en termes de capacité (102a à 102c), une pluralité de routeurs (101a à 101g) acheminant de tels messages dans ledit réseau (100) et au moins une paire de passerelle de transfert (103a, 103b, 103c, 103c'), une première passerelle de ladite paire étant disposée pour traiter des messages entrant dans un sous réseau contraint, la seconde passerelle de ladite paire étant disposée pour traiter des messages sortant de ce même sous-réseau, ledit traitement incluant l'adressage et les adaptations au protocole spécifique du sous-réseau contraint considéré, un desdits routeurs (101a à 101g) comprenant trois interfaces avec le niveau d'application 7 :
• une première interface I_{AFF} d'affiliation permettant à une application de demander à enregistrer sa localisation auprès du réseau (100) ;
• une deuxième interface I_{RES}, permettant à une source d'établir une session pour transmettre un flux de messages requérant une qualité de service particulière ;
• une troisième interface I_{MSG}, permettant à une source de déposer un message à distribuer vers des destinataires spécifiés dans le message ;
ledit routeur (101a à 101g) comprenant en outre un module d'acheminement (201) recevant lesdits messages, un module de localisation et de routage LOC (202), mis à jour grâce à des messages de localisation émis par les applications utilisatrices du réseau (100) et reçus par IAFF ces messages informant le module LOC (202) du rattachement et détachement des applications à ce routeur afin que le module LOC puisse construire la topologie instantanée du réseau (100) en recoupant sa connaissance locale avec la connaissance qu'il a des autres modules LOC des autres routeurs déployés sur le réseau ; le procédé comportant au moins les étapes suivantes, mises en oeuvre dans ledit routeur (101 a à 101g):
a) recevoir un dit message via l'interface I_{MSG} ;
b) pour ledit message, le module d'acheminement (201) demande au module LOC (202) d'identifier les prochains routeurs (101a à 101g) à atteindre pour acheminer le message vers son ou ses destinataires ;
c) pour ledit message, le module d'acheminement (201) identifie et met en oeuvre la qualité de service de transmission requise pour le message via l'analyse du contenu dudit message en marquant la priorité de transfert dudit message, ladite priorité correspondant aux exigences de qualité de service identifiées ;
d) lorsque le prochain bond transmet un message vers un sous-réseau contraint, le module d'acheminement adapte le contenu du message pour traverser un sous-réseau contraint (102a à 102c), ces adaptations étant déterminées en fonction des capacités du sous-réseau contraint et du contenu du message,
e) ladite étape d'adaptation comprenant les sous-étapes suivantes ;
• une sous-étape de compression dudit contenu du message ;
• une sous-étape de détermination des pièces jointes dudit message devant être supprimées à partir de la taille desdites pièces jointes ;
• une sous-étape de transfert dudit message avec ses paramètres incluant l'adresse d'une passerelle de transfert étant disposée pour traiter les messages sortant du sous réseau contraint, vers une passerelle de transfert étant disposée pour traiter les messages entrant dans le sous-réseau contraint.

2. Procédé d'acheminement selon la revendication 1, **caractérisé en ce qu'**au moins un sous-réseau contraint (102a à 102c) est un sous-réseau de radiocommunications.

3. Procédé d'acheminement selon l'une des revendications précédentes, **caractérisé en ce qu'**un message déposé sur l'interface I_{MSG} est formaté selon le standard SOAP, le format d'adressage utilisé dans le message étant une extension du standard « WS-addressing » permettant de spécifier plusieurs destinataires au message, ladite extension étant effectuée par l'ajout d'un champ spécifique dans l'entête du message.

4. Routeur de messages produits au niveau 7 dans un format unique sur la base d'un protocole facilitant l'interopérabilité entre applications différentes (SOAP) mis en oeuvre dans un réseau distribué (100) comprenant au moins un sous-réseau contraint en termes de capacité (102a à 102c), et au moins ledit routeur, ledit routeur (101a à 101g) étant configuré pour acheminer de tels messages dans ledit réseau (100) et au moins une paire de passerelles de transfert (103a, 103b, 103c, 103c'), une première passerelle de ladite paire étant disposée pour traiter des messages entrant dans un sous-réseau contraint, la seconde passerelle de ladite paire étant disposée pour traiter des messages sortant de ce même sous-réseau, ledit traitement incluant l'adressage et les adaptations au protocole spécifique du sous-réseau contraint considéré, ledit routeur (101 a à 101 g) comprenant trois interfaces avec le niveau d'application 7 :
• une première interface I_{AFF} d'affiliation permettant à une application de demander à enregistrer sa localisation auprès du réseau (100) ;
• une deuxième interface I_{RES}, permettant à une source d'établir une session pour transmettre un flux de messages requérant une qualité de service particulière ;
• une troisième interface I_{MSG}, permettant à une source de déposer un message à distribuer vers des destinataires spécifiés dans le message ;
ledit routeur (101a à 101g) comprenant en outre un module d'acheminement (201) recevant lesdits messages, un module de localisation et de routage LOC (202), mis à jour grâce à des messages de localisation émis par les applications utilisatrices du réseau (100) et reçus par I_{AFF}, ces messages informant le module LOC (202) rattachement et détachement des applications à ce routeur afin que le module LOC puisse construire la topologie instantanée du réseau (100) en recoupant sa connaissance locale avec la connaissance qu'il a des autres modules LOC d' autres routeurs déployés sur le réseau, ledit routeur étant configuré pour exécuter les étapes a) à e) du procédé selon l'une des revendications 1 à 3.

5. Routeur de messages selon la revendication précédente, comportant un module de signalisation (203) configuré pour réserver des ressources sur des sous-réseaux pour des applications souhaitant établir des sessions de distribution aux exigences de qualité de services particulières, le module d'acheminement (201) étant configuré pour interagir avec le module de signalisation (203) pour établir les priorités de transfert aux messages.

6. Système de distribution de messages entre une source et un ou plusieurs destinataires connectés sur un réseau distribué (100) pour la mise en oeuvre d'un procédé selon l'une des revendications 1 à 3, ledit réseau comprenant un ou plusieurs sous-réseaux contraints en termes de capacité (102a à 102c), ledit système étant **caractérisé en ce qu'**il comporte plusieurs routeurs de messages (101a à 101g) selon l'une des revendications 4 à 5,

## Patentansprüche

1. Verfahren zum Leiten von in Schicht 7 erzeugten Nachrichten in einem einmaligen Format auf der Basis eines Protokolls, das die Interoperabilität zwischen verschiedenen Anwendungen (SOAP) erleichtert, die in einem verteilten Netzwerk (100) implementiert werden, das mindestens ein kapazitätsbeschränktes Teilnetz (102a bis 102c), mehrere Router (101a bis 101g), die solche Nachrichten in dem Netzwerk (100) routen, mindestens ein Paar Transfer-Gateways (103a, 103b, 103c, 103c') umfasst, wobei ein erstes Gateway des Paares zum Verarbeiten von Nachrichten vorgesehen ist, die in ein beschränktes Teilnetz eintreten, wobei das zweite Gateway des Paares zum Verarbeiten von Nachrichten vorgesehen ist, die aus demselben Teilnetz austreten, wobei das Verfahren das Adressieren und Adaptieren an das spezifische Protokoll des betrachteten beschränkten Teilnetzes einschließt, wobei einer der Router (101a bis 101g) drei Schnittstellen mit der Anwendungsschicht 7 umfasst:
• eine erste Zugehörigkeitsschnittstelle I_{AFF}, die es zulässt, dass eine Anwendung die Aufzeichnung ihres Ortes relativ zu dem Netzwerk (100) anfordert;
• eine zweite Schnittstelle IRES, die es zulässt, dass eine Quelle eine Sitzung zum Übertragen eines Flusses von Nachrichten einrichtet, die eine bestimmte Servicequalität benötigen;
• eine dritte Schnittstelle IMSG, die es zulässt, dass eine Quelle eine Nachricht zu in der Nachricht vorgegebenen Empfängern verteilt;
wobei der Router (101a bis 101g) ferner ein die Nachrichten empfangendes Routing-Modul (201), ein Ortungs- und Routing-Modul LOC (202) umfasst, aktualisiert aufgrund von von den Benutzeranwendungen des Netzwerks (100) übertragenen und von I_{AFF} empfangenen Ortsnachrichten, wobei die Nachrichten das Modul LOC (202) über das Zu- und Abschalten der Anwendungen zu/von diesem Router benachrichtigen, so dass das LOC-Modul die momentane Topologie des Netzwerks (100) durch Abgleichen seiner lokalen Kenntnis mit der Kenntnis konstruieren kann, die es über die anderen LOC-Module der anderen auf dem Netzwerk eingesetzten Router hat;
wobei das Verfahren mindestens die folgenden Schritte beinhaltet, implementiert in dem Router (101a bis 101g):
a) Empfangen einer der Nachrichten über die Schnittstelle I_{MSG};
b) Anfordern, durch das Routing-Modul (201) für die Nachricht, dass das LOC-Modul (202) die nächsten zu erreichenden Router (101a bis 101g) identifiziert, um die Nachricht zu einem oder mehreren ihrer Empfänger zu routen;
c) Identifizieren und Implementieren, durch das Routing-Modul (201) für die Nachricht, der für die Nachricht benötigten Sendeservicequalität über eine Analyse des Inhalts der Nachricht, durch Markieren der Transferpriorität der Nachricht, wobei die Priorität den identifizierten Servicequalitätsanforderungen entspricht;
d) Adaptieren durch das Routing-Modul, wenn im nächsten Sprung eine Nachricht zu einem beschränkten Teilnetz übertragen wird, des Inhalts der Nachricht, so dass sie ein beschränktes Teilnetz (102a bis 102c) passieren kann, wobei diese Adaptionen in Abhängigkeit von den Kapazitäten des beschränkten Teilnetzes und vom Inhalt der Nachricht bestimmt werden;
e) wobei der Adaptionsschritt die folgenden Teilschritte beinhaltet:
• einen Teilschritt des Komprimierens des Inhalts der Nachricht;
• einen Teilschritt des Bestimmens von Anhängen an der Nachricht, die auf der Basis der Größe der Anhänge gelöscht werden müssen;
• einen Teilschritt des Übertragens der Nachricht mit ihren Parametern einschließlich der Adresse eines Transfer-Gateway, die gegeben wird, um die das beschränkte Teilnetz verlassenden Nachrichten zu verarbeiten, zu einem Transfer-Gateway, das zum Verarbeiten der in das beschränkte Teilnetz eintretenden Nachrichten bereitgestellt wird.

2. Routing-Verfahren nach Anspruch 1, **dadurch gekennzeichnet, dass** mindestens ein beschränktes Teilnetz (102a bis 102c) ein Radiokommunikationsteilnetz ist.

3. Routing-Verfahren nach einem der vorherigen Ansprüche, **dadurch gekennzeichnet, dass** eine auf der Schnittstelle I_{MSG} bereitgestellte Nachricht gemäß dem SOAP-Standard formatiert wird, wobei das in der Nachricht benutzte Adressierformat eine Erweiterung des "WS-addressing" Standards ist, die die Vorgabe von mehreren Nachrichtenempfängern zulässt, wobei die Erweiterung durch Hinzufügen eines bestimmten Feldes zum Nachrichtenkopf erzielt wird.

4. Router für Nachrichten, die in Schicht 7 in einem einmaligen Format auf der Basis eines Protokolls erzeugt wurden, das die Interoperabilität zwischen verschiedenen Anwendungen (SOAP) erleichtert, die in einem verteilten Netzwerk (100) implementiert werden, das mindestens ein kapazitätsbeschränktes Teilnetz (102a bis 102c) und mindestens den Router (101a bis 101g), wobei der Router (101a bis 101g) zum Routen solcher Nachrichten in dem Netzwerk (100) konfiguriert ist, und mindestens ein Paar Transfer-Gateways (103a, 103b, 103c, 103c') umfasst, wobei ein erstes Gateway des Paares zum Verarbeiten von Nachrichten vorgesehen ist, die in ein beschränktes Teilnetz eintreten, wobei das zweite Gateway des Paares zum Verarbeiten von Nachrichten vorgesehen ist, die aus demselben Teilnetz austreten, wobei das Verfahren das Adressieren und Adaptieren an das spezifische Protokoll des betrachteten beschränkten Teilnetzes einschließt, wobei der Router (101a bis 101g) drei Schnittstellen mit der Anwendungsschicht 7 umfasst:
• eine erste Zugehörigkeitsschnittstelle I_{AFF}, die es zulässt, dass eine Anwendung die Aufzeichnung ihres Ortes relativ zu dem Netzwerk (100) anfordert;
• eine zweite Schnittstelle IRES, die es zulässt, dass eine Quelle eine Sitzung zum Übertragen eines Flusses von Nachrichten einrichtet, die eine bestimmte Servicequalität benötigen;
• eine dritte Schnittstelle IMSG, die es zulässt, dass eine Quelle eine Nachricht zu in der Nachricht vorgegebenen Empfängern verteilt;
wobei der Router (101a bis 101g) ferner ein die Nachrichten empfangendes Routing-Modul (201), ein Ortungs- und Routing-Modul LOC (202) umfasst, aktualisiert aufgrund von von den Benutzeranwendungen des Netzwerks (100) übertragenen und von I_{AFF} empfangenen Ortsnachrichten, wobei die Nachrichten das LOC-Modul (202) über das Zu- und Abschalten der Anwendungen zu/von diesem Router benachrichtigt, so dass das LOC-Modul die momentane Topologie des Netzwerks (100) durch Abgleichen seiner lokalen Kenntnis mit der Kenntnis konstruieren kann, die es über die anderen LOC-Module der anderen auf dem Netzwerk eingesetzten Router hat, wobei der Router zum Ausführen der Schritte a) bis e) des Verfahrens nach einem der Ansprüche 1 bis 3 konfiguriert ist.

5. Nachrichten-Router nach dem vorherigen Anspruch, der ein Signalisierungsmodul (203) umfasst, das zum Reservieren von Ressourcen auf Teilnetzen für Anwendungen konfiguriert ist, die die Einrichtung von Verteilungssitzungen gemäß bestimmten Servicequalitätsanforderungen benötigen, wobei das Routing-Modul (201) zum Interagieren mit dem Signalisierungsmodul (203) konfiguriert ist, um die Übertragungsprioritäten der Nachrichten einzurichten.

6. System zum Verteilen von Nachrichten zwischen einer Quelle und einem oder mehreren mit einem verteilten Netzwerk (100) verbundenen Empfängern zum Implementieren eines Verfahrens nach einem der Ansprüche 1 bis 3, wobei das Netzwerk ein oder mehrere kapazitätsbeschränkte Teilnetze (102a bis 102c) umfasst, wobei das System **dadurch gekennzeichnet ist, dass** es mehrere Nachrichten-Router (101a bis 101g) nach einem der Ansprüche 4 bis 5 umfasst.

## Claims

1. A method for routing messages produced on layer 7 in a unique format on the basis of a protocol facilitating interoperability between various applications (SOAP) implemented in a distributed network (100) comprising at least one capacity-constrained sub-network (102a to 102c), a plurality of routers (101a to 101g) routing such messages in said network (100) and at least one pair of transfer gateways (103a, 103b, 103c, 103c'), a first gateway of said pair being provided to process messages entering a constrained sub-network, the second gateway of said pair being provided to process messages exiting said sub-network, said process including addressing and adapting to the specific protocol of the considered constrained sub-network, one of said routers (101a to 101g) comprising three interfaces with application layer 7:
• a first affiliation interface I_{AFF} allowing an application to request the recording of its location in relation to the network (100);
• a second interface IRES allowing a source to establish a session to transmit a stream of messages requiring a particular quality of service;
• a third interface IMSG allowing a source to provide a message to distribute to recipients specified in the message;
said router (101a to 101g) further comprising a routing module (201) receiving said messages, a location and routing module LOC (202) updated by virtue of location messages transmitted by the user applications of said network (100) and received by I_{AFF}, said messages notifying said module LOC (202) of the attachment and detachment of the applications to/from this router so that said module LOC can construct the instantaneous topology of the network (100) by cross-checking its local knowledge with the knowledge that it has of the other modules LOC of the other routers deployed on the network;
said method comprising at least the following steps, implemented in said router (101a to 101g):
a) receiving one of said messages via the interface I_{MSG};
b) said routing module (201) requesting, for said message, that said LOC module (202) identifies the next routers (101a to 101g) to be reached in order to route the message towards its one or more recipients;
c) said routing module (201) identifying, for said message, and implementing the transmission quality of service required for the message via the analysis of the content of said message by marking the transfer priority of said message, said priority corresponding to the identified quality of service requirements;
d) said routing module adapting, when the next hop transmits a message towards a constrained sub-network, the content of the message in order to pass through a constrained sub-network (102a to 102c), said adaptations being determined as a function of the capacities of the constrained sub-network and of the content of the message;
e) said adaptation step comprising the following sub-steps:
• a sub-step of compressing said content of the message;
• a sub-step of determining attachments to said message that must be deleted on the basis of the size of said attachments;
• a sub-step of transferring said message with its parameters, including the address of a transfer gateway being provided in order to process the messages leaving the constrained sub-network, towards a transfer gateway that is provided to process the messages entering the constrained sub-network.

2. The routing method according to claim 1, **characterised in that** at least one constrained sub-network (102a to 102c) is a radiocommunication sub-network.

3. The routing method according to any one of the preceding claims, **characterised in that** a message provided on the interface I_{MSG} is formatted according to the SOAP standard, the addressing format used in the message being an extension of the "WS-addressing" standard allowing a plurality of message recipients to be specified, said extension being carried out by adding a specific field to the message header.

4. A router of messages produced on layer 7 in a unique format on the basis of a protocol facilitating interoperability between various applications (SOAP) implemented in a distributed network (100) comprising at least one capacity-constrained sub-network (102a to 102c) and at least said router, said router (101a to 101g) being configured to route such messages in said network (100), and at least one pair of transfer gateways (103a, 103b, 103c, 103c'), a first gateway of said pair being provided to process messages entering a constrained sub-network, the second gateway of said pair being provided to process messages exiting said sub-network, said processing including addressing and adapting to the specific protocol of the considered constrained sub-network, said router (101a to 101g) comprising three interfaces with application layer 7:
• a first affiliation interface I_{AFF} allowing an application an application to request the recording of its location in the network (100);
• a second interface IRES allowing a source to establish a session to transmit a stream of messages requiring a particular quality of service;
• a third interface IMSG allowing a source to provide a message to distribute towards recipients specified in the message;
said router (101a to 101g) further comprising a routing module (201) receiving said messages, a location and routing module LOC (202) updated by virtue of location messages transmitted by the user applications of said network (100) and received by I_{AFF}, said messages notifying said module LOC (202) of the attachment and detachment of the applications to this router so that said module LOC can construct the instantaneous topology of the network (100) by cross-checking its local knowledge with the knowledge that it has of the other modules LOC of other routers deployed on the network, said router being configured to execute steps a) to e) of the method according to any one of claims 1 to 3.

5. The message router according to the preceding claim, comprising a signalling module (203) configured to reserve resources on sub-networks for applications desiring to establish distribution sessions according to particular quality of service requirements, said routing module (201) being configured to interact with said signalling module (203) in order to establish the transfer priorities of the messages.

6. A system for distributing messages between a source and one or more recipients connected to a distributed network (100) for implementing a method according to any one of claims 1 to 3, said network comprising one or more capacity-constrained sub-networks (102a to 102c), said system being **characterised in that** it comprises a plurality of message routers (101a to 101g) according to any one of claims 4 to 5.
